# DEMANDE DE BREVET EUROPEEN

(11) **EP 0 710 010 A1**
(43) Date de publication de la demande: **01.05.1996**
(21) Numéro de dépôt: 95202786.0
(22) Date de dépôt: 16.10.1995
(51) Int. Cl.: H04N 3/32

(54) **Circuit vidéo à modulation de vitesse de spot**

(30) Priorité: 26.10.1994 FR 9412824
(71) Demandeur: PHILIPS ELECTRONIQUE GRAND PUBLIC, F-92150 Suresnes (FR); Philips Electronics N.V., NL-5621 BA Eindhoven (NL)
(72) Inventeur: Vacher, Pierre, Société Civile S.P.I.D., F-75008 Paris (FR); Vilard, Philippe, Société Civile S.P.I.D., F-75008 Paris (FR)
(74) Mandataire: Caron, Jean

(57) **Abrégé**

Ce circuit comporte un agencement qui module la vitesse horizontale du spot en fonction du contenu vidéo, à l'aide d'un bobinage déviateur horizontal annexe. Cet agencement comporte essentiellement un différenciateur du signal vidéo suivi d'un amplificateur qui fournit du courant au bobinage déviateur. Le courant engendré par l'amplificateur (en trait continu) présente un seuil (S) pour le signal d'entrée, puis un quasi palier pour des signaux d'entrée au delà de 25%. On s'intéresse à la différence entre ce courant et le courant qui serait engendré par un amplificateur linéaire (courbe en tirets). Cette différence, par exemple pour une tension d'entrée de 50%, est appelée réserve (R).
Selon l'invention un filtre dit "trappe" est inséré dans l'agencement, en amont de l'amplificateur, ce filtre est centré sur la fréquence de sous-porteuse couleur, et il a une profondeur égale à la valeur de la réserve.
Applications : télévision.

## Description

La présente invention concerne un appareil pour l'affichage d'images en couleur à partir d'un signal vidéo analogique de type télévision comprenant entre autres un signal de luminance et une sous-porteuse de couleur, appareil muni d'un filtre coupe bande centré sur la fréquence de sous-porteuse couleur et par lequel passe le signal de luminance, d'un circuit de traitement vidéo, auquel est amené le signal de luminance issu du filtre, et d'un agencement pour moduler la vitesse du spot, auquel est également amené le signal de luminance issu du filtre, agencement qui comporte un circuit de différenciation du signal de luminance suivi d'un amplificateur qui fait passer un courant dans un bobinage agissant sur la déviation horizontale du spot.

Un tel agencement pour moduler la vitesse du spot est destiné à donner une apparence plus nette aux transitions de luminance dans une image.

Dans un tel agencement, une modulation de vitesse risque d'être appliquée intempestivement lorsque des signaux de luminance parasites sont présents, tels que du bruit ou un résidu de sous-porteuse couleur. Un tel résidu est toujours présent parce qu'il n'est pas possible de filtrer suffisamment la sous-porteuse couleur dans le susdit filtre, car on dégraderait alors la bande passante du signal de luminance.

Un agencement de modulation de vitesse du spot correspondant au préambule ci-dessus est connu du brevet US-A-4,309,725. Ce document décrit un circuit dans lequel, pour éviter l'inconvénient mentionné ci-dessus, l'amplificateur qui alimente le bobinage, à partir du signal de luminance différencié par le circuit différentiateur, est un amplificateur qui présente un double seuil (c'est-à-dire aussi bien pour les excursions de tension positives que négatives) au dessous duquel le signal différencié n'agit pas.

La présence d'un seuil est utile, néanmoins, si ce seuil est assez haut, des signaux vidéo utiles de faible amplitude risquent d'être éliminés, alors que si le seuil est bas il n'élimine pas suffisamment les signaux parasites. Un compromis satisfaisant est difficile à trouver.

Un but de l'invention est de fournir un agencement pour moduler la vitesse du spot, dans lequel ce problème est résolu.

A cet effet, le dit agencement pour moduler la vitesse du spot comprend en outre un second filtre coupe-bande centré sur la fréquence de sous-porteuse couleur et dont l'atténuation maximale est limitée.

L'introduction d'un filtre, même s'il n'est pas placé dans le chemin du signal allant vers le circuit de traitement vidéo, semble absurde puisqu'elle entraîne une limitation de la bande passante vers le haut, c'est-à-dire qu'elle limite l'action de l'agencement pour moduler la vitesse du spot, alors que c'est précisément pour agir aux fréquences élevées qu'un tel agencement est prévu. L'invention repose sur l'idée que l'introduction d'un filtre dans l'agencement pour moduler la vitesse du spot est pourtant en fin de compte bénéfique, à condition de limiter son atténuation.

De préférence, l'amplificateur engendrant le courant selon une loi non-linéaire par rapport au signal de luminance amené à son entrée, l'atténuation maximale apportée par le second filtre est égale, à plus ou moins trois décibels près, à la différence maximale entre ce courant et le courant qui serait engendré par un amplificateur linéaire fournissant le même courant maximal.

En général, l'atténuation maximale apportée par le filtre est avantageusement comprise entre -3 et -9 dB.

Dans un mode de réalisation préféré, le filtre comprend un circuit résonnant de type série à inductance et capacité, amorti par une résistance en série.

Le signal de luminance étant fabriqué à l'entrée du dit agencement à partir de trois composantes de couleur, au moyen d'un additionneur fait d'un réseau de résistances en étoile, le circuit résonnant de type série est avantageusement branché entre le point central du dit réseau en étoile et la masse, c'est-à-dire tout à fait en tête de l'agencement.

Le susdit réseau de résistances en étoile étant fait de trois résistances débitant dans une impédance de valeur ohmique Z et la pulsation de la sous-porteuse couleur étant ω, le circuit résonnant de type série est réalisé au moyen d'une inductance dont la valeur L est avantageusement telle que Lω soit compris entre quatre et dix fois Z.

Ces aspects de l'invention ainsi que d'autres aspects plus détaillés apparaîtront plus clairement grâce à la description suivante d'un mode de réalisation non limitatif.

La figure 1 représente schématiquement un téléviseur avec un circuit vidéo à modulation de vitesse de spot.

La figure 2 représente schématiquement un agencement pour la modulation de vitesse de spot.

La figure 3 est une courbe servant à illustrer le fonctionnement de l'agencement de la figure 3, pour la modulation de vitesse de spot.

La figure 4 est un schéma détaillé d'une forme de réalisation complète d'un agencement selon l'invention.

L'invention va être décrite en référence à un téléviseur, mais elle s'applique aussi à tout appareil d'affichage d'images, par exemple un moniteur. Certains téléviseurs PAL comportent un filtre en peigne pour éliminer la sous-porteuse, ce qui rend inutile le filtre de la présente invention, mais elle reste applicable lorsque le téléviseur ne comportent pas de filtre en peigne. L'invention s'applique donc à un téléviseur ou un moniteur pour SECAM, ou pour PAL ou NTSC sans filtre en peigne.

Les principes de la modulation de vitesse du spot et leur incidence sur l'aspect des transitions de luminance sont bien connues. On peut rappeler qu'il s'agit d'une manière artificielle de donner l'impression au spectateur que l'image est mieux définie qu'elle ne l'est en réalité. Pour obtenir cet effet on fait passer le signal de luminance dans un étage différenciateur qui génère donc un signal lorsqu'il y a une transition de la valeur de la luminance, signal qui est appliqué au système de déviation horizontale du faisceau pour créer une différence de vitesse du spot. Comme il serait difficile d'introduire une variation de vitesse dans les circuits de déviation horizontale connus, on préfère utiliser un bobinage de déviation annexe, située à proximité des bobinages principaux, et dans lequel on fait passer, pour corriger la vitesse du spot, un courant proportionnel à la dérivée, par rapport au temps, du signal de luminance.

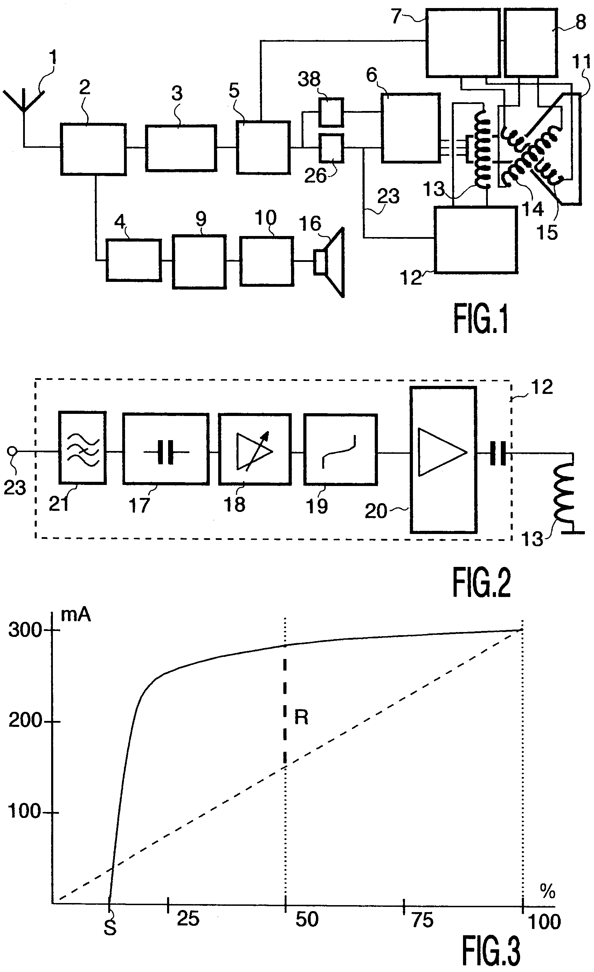

Le téléviseur dont le schéma est représenté sur la figure 1 comprend un syntoniseur 2 sélectionnant un signal d'une antenne 1 (ou d'une quelconque autre source), et transposant sa fréquence vers celles nécessitées par un amplificateur à fréquence intermédiaire vidéo 3 et par un amplificateur à fréquence intermédiaire son, ou audio, 4 qui lui font suite. L'amplificateur à fréquence intermédiaire vidéo 3 est suivi d'un démodulateur 5 qui délivre un signal vidéo en bande de base, et des signaux de synchronisation ligne et trame. Les signaux vidéo et de synchronisation pourraient aussi bien venir d'une source extérieure comme un décodeur satellite ou un magnétoscope. Les signaux de synchronisation sont fournis à un étage de balayage ligne 7 et à un étage de balayage trame 8. Le signal vidéo issu du décodeur 5 traverse d'une part un filtre passe-bande 38 centré sur la fréquence de sous-porteuse couleur, pour délivrer un signal de différence de couleur à un circuit de traitement vidéo 6, et d'autre part un filtre coupe-bande 26 centré sur la fréquence de sous-porteuse couleur, pour délivrer un signal de luminance à ce même circuit de traitement vidéo 6. Le circuit 6 réalise le matriçage et l'amplification nécessaires pour générer trois signaux de couleur rouge-vert-bleu qui sont fournis au tube image 11. Les étages de balayage trame et ligne 8 et 7 délivrent des courants dans des bobinages déviateurs principaux 14 et 15, respectivement "trame" et "ligne". L'amplificateur à fréquence intermédiaire 4 pour le son est suivi d'un démodulateur 9 qui délivre les signaux audio en bande de base à un amplificateur audio 10, alimentant un haut-parleur 16. Enfin les signaux de luminance issus du filtre 26 sont transmis à un agencement de modulation de vitesse du spot 12, qui délivre un courant de modulation de la vitesse horizontale du spot en fonction du contenu des dits signaux de luminance, dans un bobinage déviateur horizontal annexe 13. Comme l'agencement 12 introduit inévitablement des retards sur les signaux, son action risque de ne pas être correctement synchronisée avec le signal vidéo appliqué au tube 11. Pour pallier ce défaut, des circuits de retard connus (non représentés) d'environ 70 nS sont introduits dans le trajet de chacune des composantes de couleur, dans le circuit de traitement vidéo.

L'agencement de modulation de vitesse représenté sur la figure 2 comporte une entrée 23 pour le signal vidéo issu du filtre 26 de la figure 1. A partir de cette entrée, sont connectés en cascade :
- un filtre 21 coupe-bande aussi appelé trappe, centré sur la fréquence de sous-porteuse couleur, soit par exemple en SECAM : 4,33 Mhz (moyenne des fréquences pour le rouge et pour le bleu, soit respectivement 4,406 et 4,250 MHz),
- un étage 17 de différenciation du signal vidéo,
- un étage de réglage de gain 18,
- un étage préamplificateur limiteur 19, dans lequel la limitation est obtenue au moyen de diodes, et
- un étage de puissance 20 du type générateur de courant dont la sortie de courant est reliée à une borne du bobinage annexe 13 par une capacité.

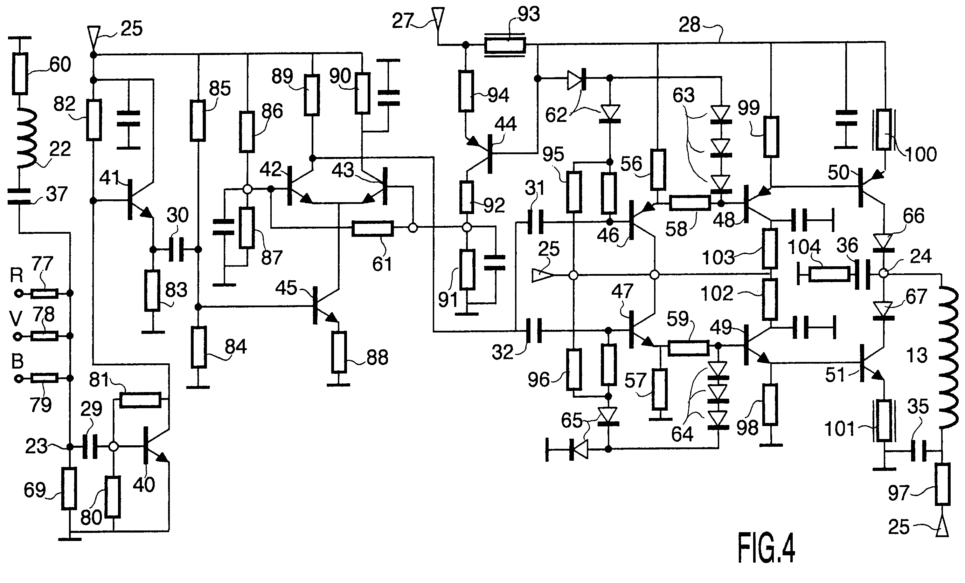

Sur la figure 3 sont représentés, en abscisse : le niveau du signal de luminance différencié à la sortie de l'étage différenciateur 17, exprimé en pourcentage de sa valeur maximale possible, et en ordonnée : la grandeur du courant correspondant produit par l'amplificateur 20 dans la bobine 13, avec un maximum avoisinant 300 mA.

La courbe en tirets montre le courant qui serait produit par un amplificateur linéaire. La courbe en trait plein montre le courant qui est produit par l'amplificateur décrit ci après. Le courant n'apparaît que pour un niveau du signal de l'ordre de 10% (point S). En outre,
- du fait que la limitation est obtenue au moyen de diodes,
- du fait qu'il existe bien évidemment un effet de saturation, dû au fait que les tensions d'alimentation ne sont pas infinies,
- et aussi à cause de l'action d'un circuit de régulation (le gain de l'ensemble diminue lorsque le courant augmente dans l'étage de puissance),
la courbe ressemble à une exponentielle.

Il est clair qu'un signal différencié donné sortant de l'étage 17, selon qu'il est plus ou moins amplifié dans l'étage 18, dépasse ou ne dépasse pas le seuil de limitation prévu dans l'étage 19. De ce fait, la forme générale de la courbe peut être modifiée par l'effet de l'étage de réglage de gain 18.

Il y a une différence, indiquée par "R", entre le courant engendré par l'agencement réel (en trait continu) et le courant qui serait engendré par un amplificateur linéaire donnant le même courant pour un signal de 100% (diagonale en tirets). Cette différence constitue en quelque sorte une "réserve" de courant : par exemple pour un signal de 50%, le courant atteint presque déjà 300 mA, alors qu'il ne serait que de 150 mA avec l'amplificateur linéaire. Ceci permet d'obtenir une amélioration des transitions de luminance dans une image, même pour des signaux de fréquence élevée dont l'amplitude aurait été réduite par le filtre 21. Il est clair en effet qu'un signal d'amplitude nominale, même réduite par le filtre, donnera toujours un courant approchant le maximum. La "réserve" est à peu près de deux.

Un fonctionnement satisfaisant est obtenu lorsque la profondeur de la trappe (autrement dit l'atténuation maximale du filtre coupe-bande 21) est de l'ordre de grandeur de la réserve, c'est-à-dire deux (-6 dB), et en pratique l'atténuation apportée par le filtre peut être avantageusement comprise entre - 3 et - 9 dB.

La figure 4 représente en détail une forme de réalisation particulière de l'agencement de la figure 2.

Les trois composantes R, V, B (rouge, vert, bleu) sont amenées, à gauche sur la figure, chacune à une extrémité d'une résistance respectivement 77, 78, 79. Ces résistances sont réunies à leur autre extrémité en un point commun 23, relié à la masse par une résistance 69, le tout constituant un circuit de matriçage qui fournit au point commun la somme des trois composantes, c'est-à-dire reconstitue la luminance. Au point 23 est relié en outre l'assemblage en série d'une capacité 37, d'une inductance 22 et d'une résistance 60. Cet assemblage est un circuit résonnant de type série, amorti par la résistance 60, qui constitue avec les résistances 77, 78, 79 un filtre coupe-bande centré sur la fréquence de sous-porteuse couleur, dont l'atténuation est limitée par la présence de la résistance 60. En estimant que l'impédance d'entrée du montage bâti autour du transistor 40 soit comprise entre 500 et 1000 Ω, venant en parallèle sur la résistance 69 de 1000 Ω et sur les résistances 77, 78, 79, ce qui constitue en fin de compte une impédance Z de l'ordre de 150 Ω, un signal présent par exemple en R serait divisé par environ dix au point 23 en l'absence du filtre. En présence du filtre et à la fréquence de la sous-porteuse couleur où l'inductance 22 et la capacité 37 ensemble représentent un court-circuit, la résistance 60 de 120 Ω vient en parallèle sur Z, et le même signal présent en R est divisé par environ vingt :
l'atténuation est donc d'à peu près deux soit -6 dB. La valeur L est telle que Lω vaut environ 900 Ω, soit environ six fois Z. En pratique une valeur L telle que Lω soit compris entre quatre et dix fois Z est satisfaisante.

Le signal est transmis par une capacité 29 à la base d'un transistor 40 de type NPN qui est monté suivant le montage dit en émetteur commun, et qui est polarisé au moyen d'un pont de deux résistances 80,81 connecté entre le collecteur du transistor et la masse. La constante de temps procurée par la capacité 29 et les différentes impédances qui lui sont reliées est choisie de façon à procurer l'effet différenciateur recherché. Le signal amplifié, qui apparaît aux bornes d'une résistance de charge 82 reliée à une source de tension d'alimentation positive 25, est amené à la base d'un transistor 41 de type NPN, monté en émetteur suiveur, dont le collecteur est directement relié à la source 25, et dont l'émetteur est relié à la masse par une résistance 83. Le montage comprenant la capacité 29 et les transistors 40,41 correspond à l'étage de différenciation 17 de la figure 2.

A partir de l'émetteur du transistor 41, le signal amplifié est amené via une capacité 30 à la base d'un transistor 45 de type NPN, polarisé au moyen d'un pont de deux résistances 84,85 connecté entre la source de tension d'alimentation 25 et la masse, et monté suivant le montage dit en émetteur commun avec néanmoins une résistance 88 dans sa connexion d'émetteur pour améliorer la linéarité. Ce transistor constitue la "queue" d'un montage différentiel bien connu constitué par le transistor 45 et par une paire de transistors 42,43 de type NPN chargés par des résistances de collecteur respectivement 89,90. Le transistor 42 est polarisé au moyen d'un pont de deux résistances 86,87 connecté entre la source de tension d'alimentation 25 et la masse. La base est découplée à la masse par une capacité.

Le transistor 43, lui, est polarisé au moyen d'un montage particulier constitué d'une source de courant 44 débitant dans deux résistances 92,91 en série, au point commun desquelles est reliée la base du transistor 43. Le transistor 44 de type PNP constitue une source de courant, son émetteur est connecté, via une résistance 94, à une source de tension d'alimentation positive 27. A cette même source 27 est connectée une première extrémité d'une résistance 93 de faible valeur, servant de résistance de mesure, dans laquelle passe le courant d'alimentation des étages de puissance. La base du transistor 44 est connectée à la seconde extrémité de la résistance 93 et ainsi la tension base émetteur directe de ce transistor augmente lorsque le courant dans l'étage de puissance augmente. Alors le courant dans les transistors 44 et 43 augmente aussi et par voie de conséquence celui dans le transistor 42 diminue. Le signal de sortie du montage est justement prélevé sur le collecteur du transistor 42, et le gain de l'ensemble diminue donc lorsque le courant augmente dans l'étage de puissance. Ceci réalise une régulation automatique de ce courant et contribue à donner à la courbe de la figure 2 sa forme aplatie en haut. La dite seconde extrémité de la résistance 93 constitue une source de tension d'alimentation référencée 28 qui alimente plusieurs étages. Le montage comprenant les transistors 45,42,43 correspond à l'étage de réglage de gain 18 de la figure 2.

Le signal sur le collecteur du transistor 42 est amené via deux capacités 31,32 en même temps aux deux entrées d'un préamplificateur symétrique de type connu en soi, muni de deux voies d'amplification constituées respectivement d'une cascade de deux transistors PNP 46,48 montés tous deux suivant le montage dit émetteur suiveur et d'une cascade de deux transistors NPN 47,49 montés tous deux aussi en émetteurs suiveurs. Les collecteurs de ces quatre transistors sont tous reliés à la source de tension d'alimentation 25. Le transistor d'entrée 46 de la voie PNP est polarisé, à partir de la source de tension d'alimentation 28, au moyen de deux diodes en série 62 qui débitent vers l'alimentation 25 via une résistance 95, la base du transistor 46 étant reliée par une résistance au point commun entre la résistance 95 et les diodes 62. L'émetteur du transistor 46 est relié par une résistance 58 à la base du transistor 48, ce qui réalise la polarisation de ce dernier. A partir de la tension d'alimentation 28, on trouve les deux tensions directes des diodes 62 en série, égales aux deux tensions correspondantes base-émetteur en série des transistors 48 et 46, ce qui procure une polarisation correcte de ces deux transistors.

Les transistors 47 et 49 de la voie NPN sont polarisés de façon semblable mais symétrique, à partir de la source de tension d'alimentation 25, au moyen d'une résistance 96 qui débite dans deux diodes en série 65 vers la masse, la base du transistor 47 étant reliée par une résistance au point commun entre la résistance 96 et les diodes 65, et l'émetteur du transistor 47 étant relié par une résistance 59 à la base du transistor 49.

La base du transistor 48 est reliée par une cascade de trois diodes en série 63 au point commun des deux diodes 62, ce qui entraîne un écrêtage du signal de base du transistor 48, l'empêchant de descendre de plus de trois fois la valeur d'une tension directe de diode, par rapport à la tension au point commun des deux diodes 62, qui est sensiblement égale justement à la valeur moyenne de polarisation de la base du transistor. C'est ce qui entraîne l'effet de limitation déjà mentionné. De façon symétrique, la base du transistor 49 est reliée par une cascade de trois diodes en série 64 au point commun des deux diodes 65, ce qui entraîne un écrêtage du signal de base du transistor 49, l'empêchant de monter de plus de trois fois la valeur d'une tension directe de diode, par rapport à la tension au point commun des deux diodes 65.

L'émetteur du transistor 46 est relié à l'alimentation 28 par une résistance de charge 56, celui du transistor 47 est relié à la masse par une résistance de charge 57, celui du transistor 48 est relié à l'alimentation 28 par une résistance de charge 99, et celui du transistor 49 est relié à la masse par une résistance de charge 98. Des résistances 102 et 103, découplées chacune par une capacité reliée à la masse, sont insérées dans les connexions de collecteur respectivement des transistors 49 et 48, et servent à limiter la puissance dissipée dans ces transistors.

Le montage comprenant les transistors 46 à 49 correspond au préamplificateur limiteur 19 de la figure 2.

Enfin le signal sur les émetteurs des transistors 48 et 49 commande les bases des transistors de puissance PNP 50 et NPN 51 respectivement, montés en série l'un avec l'autre, tous deux montés en générateurs de courant, avec des résistances d'émetteur respectivement 100 et 101.

Deux diodes en série 66 et 67 sont insérées entre les collecteurs des transistors 50 et 51, et une extrémité du bobinage annexe 13 est connectée au point commun 24 de ces diodes. L'autre extrémité du bobinage annexe 13 est reliée à l'alimentation 25 par une résistance 97 et à la masse par une capacité 35. Les diodes 66, 67 ont le rôle suivant: si par exemple un courant important circule dans le bobinage 13 et dans le transistor 51 et que ce dernier soit brusquement bloqué, la tension au point 24 croît alors de façon importante, et la présence de la diode 66 permet d'éviter une polarisation inverse du transistor.

Entre le point commun des diodes 66,67 et la masse se trouve en outre un montage en série d'une résistance 104 et d'une capacité 36, habituel dans ce genre d'amplificateur (montage dit "Boucherot"), et destiné à empêcher des autooscillations dans certaines circonstances.

Le montage comprenant les transistors 50 et 51 constitue l'étage de puissance référencé 20 sur la figure 2.

Dans une réalisation ayant donné de bons résultats, les composants ont les valeurs ou sont des types suivants :
transistors : n° 40,41 = BC848, n° 42,43 = BC847 , n° 44 = BC858 , n° 45,47,49 = BC547, n° 46,48 = BC557 , n° 50 = BD826, n° 51 = BD825,
diodes : n° 62 à 65 = LL4148 , n° 66,67 = LL4150,
capacités : n° 29 = 47 pF, n° 31, 32 = 1 nF, n° 30, 36 = 27 nF , n° 37 = 39 pF, n° 35 = 47 µF
inductances : n° 22 = 33 µH, bobinage déviateur (13) = 2 µH
résistances : n° 93, 100, 101 = 10 Ω, n° 98, 99 = 33 Ω, n° 97 = 56 Ω, n° 104 = 100 Ω, n° 60 = 120 Ω, n° 56, 57, 102, 103 = 330 Ω, n° 83, 88 = 470 Ω, n° 58, 59 = 560 Ω, n° 69, 80, 82, 94 = 1 kΩ, n° 89, 90 = 1,2 kΩ, n° 77, 78, 79 = 1,5 kΩ, n° 95, 96 = 3,3 kΩ, n° 61, 91 = 6,8 kΩ, n° 81 = 10 kΩ, n° 87 = 12 kΩ, n° 84 = 15 kΩ, n° 86 = 22 kΩ, n° 92 = 47 kΩ, n° 85 = 120 kΩ. Les résistances 93, 100 et 101 sont des résistances dites de sécurité qui se détruisent sans flamme en cas de surcharge.
tensions d'alimentation : n° 25= 14 volts, n° 27= 33 volts.

## Revendications

1. Appareil pour l'affichage d'images en couleur à partir d'un signal vidéo analogique de type télévision comprenant entre autres un signal de luminance et une sous-porteuse de couleur, appareil muni d'un filtre coupe bande (26) centré sur la fréquence de sous-porteuse couleur et par lequel passe le signal de luminance, d'un circuit de traitement vidéo (6), auquel est amené le signal de luminance issu du filtre, et d'un agencement (12) pour moduler la vitesse du spot, auquel est également amené le signal de luminance issu du filtre, agencement qui comporte un circuit (17) de différenciation du signal de luminance suivi d'un amplificateur (18, 19, 20) qui fait passer un courant dans un bobinage (13) agissant sur la déviation horizontale du spot, caractérisé en ce que le dit agencement (12) comprend en outre un second filtre (21) coupe-bande centré sur la fréquence de sous-porteuse couleur et dont l'atténuation maximale est limitée.

2. Appareil pour l'affichage d'images en couleur selon la revendication 1, caractérisé en ce que, l'amplificateur (18, 19, 20) engendrant le courant selon une loi non-linéaire par rapport au signal de luminance amené à son entrée, l'atténuation maximale apportée par le second filtre (21) est égale, à plus ou moins trois décibels près, à la différence maximale (R) entre ce courant et le courant qui serait engendré par un amplificateur linéaire fournissant le même courant maximal.

3. Appareil pour l'affichage d'images en couleur selon la revendication 2, caractérisé en ce que l'atténuation maximale apportée par le second filtre (21) est comprise entre -3 et -9 dB.

4. Appareil pour l'affichage d'images en couleur selon la revendication 1, caractérisé en ce que le second filtre comprend un circuit résonnant de type série à inductance (22) et capacité (37), amorti par une résistance (60) en série.

5. Appareil pour l'affichage d'images en couleur selon la revendication 4, caractérisé en ce que, le signal de luminance étant fabriqué à l'entrée du dit agencement à partir de trois composantes de couleur, au moyen d'un additionneur fait d'un réseau de résistances (77-79) en étoile, le circuit résonnant de type série est branché entre le point central (23) du dit réseau en étoile et la masse.

6. Appareil pour l'affichage d'images en couleur selon la revendication 5, caractérisé en ce que, le réseau de résistances (77-79) en étoile étant fait de trois résistances débitant dans une impédance de valeur ohmique Z et la pulsation de la sous-porteuse couleur étant ω, le circuit résonnant de type série est fait au moyen d'une inductance dont la valeur L est telle que Lω soit compris entre quatre et dix fois Z.
